# EUROPEAN PATENT SPECIFICATION

(11) **EP 1 395 456 B1**
(45) Date of publication and mention of the grant of the patent: **21.09.2005**
(21) Application number: 02733729.4
(22) Date of filing: 22.05.2002
(51) Int. Cl.: B60K 17/28, B60K 25/06, F02B 67/04

(54) **POWER TAKE-OFF IN A MOTOR DRIVEN VEHICLE**
KRAFTABNAHME IN EINEM MOTORGETRIEBENEN FAHRZEUG
PRISE DE FORCE DANS UN VEHICULE MOTORISE

(30) Priority: 23.05.2001 SE 0101834
(43) Date of publication of application: 10.03.2004
(73) Proprietor: Scania CV AB (publ), 151 87 Södertälje (SE)
(72) Inventor: HAGBERG, Kenneth, S-151 45 Södertälje (SE); SVEDESTAD, Stefan, S-141 41 Huddinge (SE); CARLSSON, Jan, S-646 30 Gnesta (SE); GÖRANSSON, Anders, S-281 46 Tormestorp (SE); NILSSON, Hilding, S-155 71 Nykvarn (SE); NILSSON, Magnus, S-280 64 Glimakra (SE)
(86) International application number: PCT/SE2002/000973
(87) International publication number: WO 2002/094600

(56) References cited:
- US-A- 3 216 104
- US-A- 4 132 090
- US-A- 4 453 830
- US-A- 4 813 290
- US-A- 5 658 087

## Description

### BACKGROUND TO THE INVENTION, AND STATE OF THE ART

The invention relates to a power take-off on an engine-driven vehicle according to the preamble to claim 1.

Power take-offs (PTOs) are used in many contexts to supply driving power to such items as auxiliary equipment of vehicles of various kinds. The PTO's driving power is usually obtained from the vehicle's driveline via a transmission element in the vehicle's gearbox. The PTO is usually connected to a hydraulic pump which itself drives said auxiliary equipment.

A known PTO on a vehicle incorporates a first unit with a bearing bracket which supports a gearwheel which is mounted in engagement with a gearwheel of the vehicle's gearbox. The bearing bracket is fastened to a sidewall of the gearbox. The gearwheel of the first unit incorporates a hub which is in engagement with a first end of a shaft via a first spline connection. The other end of the shaft is in engagement with a corresponding hub of a second unit via a second spline connection. The second unit is mounted adjacent to a rear edge of the gearbox and incorporates suitable connecting means for connecting and driving a hydraulic pump. The hub of the gearwheel of the first unit and the hub of the second unit are in line here so that said shaft allows here the transmission of a driving motion.

Certain situations, however, require a PTO with an output speed which differs from that usually applied. In such cases the bearing bracket is provided with a gearwheel of a size and a number of teeth as required for providing the PTO with the desired output speed. In cases where a higher output speed is desired, the bearing bracket is thus provided with a smaller gearwheel with a smaller number of teeth. For such a smaller gearwheel to be in engagement with the gearbox's gearwheel, it has to be situated closer to the gearbox's gearwheel than the usually applied larger gearwheel. For the hub of the gearwheel of the bearing bracket and the hub of the coupling unit to be in line, a specially adapted bearing bracket is required for the smaller gearwheel.

The closest prior art US 4 453 830 shows to a transmission for driving a concrete mixer drum on a vehicle. During a rotary motion of the drum when it is filled with concrete, relative motions between the drum and a housing for the transmission inevitably arise. The transmission comprises a shaft provided with arcuate splines at its ends portions. By means of the arcuate splines, the shaft may be angulary adjusted such that it is possible to maintain the driving operation of the drum even when relative motions between the drum and the transmission housing occur.

### SUMMARY OF THE INVENTION

The object of the present invention is to provide a PTO on a motor vehicle which incorporates a number of basic components which may substantially always be fitted in the motor vehicle even when PTOs are manufactured with different output speeds.

The object indicated above is achieved with the PTO mentioned in the introduction which is characterised by what is indicated in the characterising part of claim 1. A spline connection allows a certain axial mobility between the constituent parts of the spline connection. The same shaft may therefore be used for bridging the distance between the two hubs which have parallel centrelines even if one hub protrudes laterally relative to the second hub so that the centrelines of the hubs are no longer in line with one another. Appropriate design of the spline connection makes it possible for one shaft to be angled so that it can in this case receive a driving motion from the first hub and transmit it to the second hub. Although the hub of the first unit and the hub of the second unit need not necessarily have parallel centrelines, the shaft can also transmit a driving motion between the first and second units when the hubs have assumed different rotational positions relative to one another. This means that the PTO may incorporate a shaft and a number of basic components which may always be fitted in a vehicle even when PTOs with different output speeds are manufactured, resulting in the position of the first hub being altered. The cost of manufacturing PTOs with different output speeds is thus significantly reduced by the increased possibility of modularisation of the relevant components.

According to a preferred embodiment of the invention, the first portion and second portion of the shaft may be positioned at substantially continuously variable angles to the accommodating recesses in the hub within an angular range. This means that motion-transmitting elements of substantially any desired size may be used for achieving a desired PTO output speed value. The first portion and second portion of the shaft may with advantage be angled within an angular range of at least ± 5% to the hubs of the accommodating recesses. The first portion and second portion of the shaft preferably incorporate a peripheral surface which comprises a number of ridges which are mainly axial in extent and which exhibit a peripheral surface which in an axial direction is situated at a variable radial distance from a centreline through the shaft. An appropriate peripheral shape of the ridges allows the first and second portions of the shaft to be angled in the recesses of the hubs without the ridges leaving the ridge-accommodating grooves in the recesses. The spline connection thus maintains its power-transmitting capacity even with an angled shaft. Alternatively, the first and second portion of the shaft may incorporate a conventional spline design with straight ridges while the recesses of the hubs incorporate grooves with a peripheral surface which is situated at a variable radial distance from a centreline through the recesses of the hubs. Such a shape of the grooves also makes possible a continuous oblique positioning of the first and second portions of the shaft in the recesses.

According to another preferred embodiment of the present invention, the peripheral surface of the ridges exhibits a maximum distance from the centreline at an axial intermediate position which is situated between the axial end positions of the ridges. When the first and second portions of the shaft are not angled in the recesses, the portion of the ridges which exhibits said maximum radial distance is substantially only in engagement with the grooves of the recesses. In the situation when the first and second portions of the shaft are angled in the accommodating recesses, the engaging portions of the ridges protrude partly from said axial middle position. With advantage, the distance of the peripheral surfaces of the ridges decreases continuously from the axial intermediate position towards the axial end positions. This means that the first and second portions of the shaft can be angled so much that substantially the whole axial extent of the ridges can be used. With advantage, the peripheral surfaces of the ridges exhibit part of a circular path between the axial end positions. This means that the first and second portions of the shaft can be positioned obliquely continuously in the recesses, which may here exhibit a conventional spline design with straight grooves to accommodate said ridges. Only the spline design of the first and second portions of the shaft need be modified relative to a conventional PTO design.

According to the present invention, the motion-transmitting element of the first unit is a gearwheel. As said first and second spline connections also allow power transmission with a substantially continuously obliquely positioned shaft, a gearwheel ofsubstantially any desired size may here be arranged in engagement with a transmission element of the vehicle. Said transmission element is a gearwheel in a gearbox. The transmission element is with advantage the forward gearwheel on the gearbox's countershaft.
According to the invention, the gearwheel is fastened to the gearbox by means of a bearing bracket. As said first and second spline connections thus allow power transmission with an obliquely positioned shaft, the same bearing bracket can be used for gearwheels of different sizes. Significant economies may thus be made.

According to another preferred embodiment of the present invention, said item driven by the PTO is a hydraulic pump. Hydraulic operation is often preferable on vehicles which incorporate auxiliary equipment of various kinds.

### BRIEF DESCRIPTION OF THE DRAWINGS

A preferred embodiment of the invention is described below by way of example with reference to the attached drawings, in which:
- Fig. 1: depicts schematically a PTO fastened to a gearbox,
- Fig. 2: depicts a PTO according to the present invention,
- Fig. 3: depicts a shaft with a splined end portion according to the present invention,
- Fig. 4: depicts the end portion of the shaft in Fig. 3 as seen from the side, and
- Fig. 5: depicts a sectional view of a hub with a splined recess for accommodating said shaft portion.

### DETAILED DESCRIPTION OF A PREFERRED EMBODIMENT OF THE INVENTION

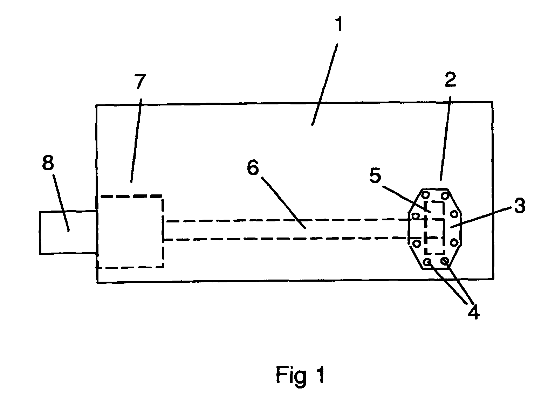

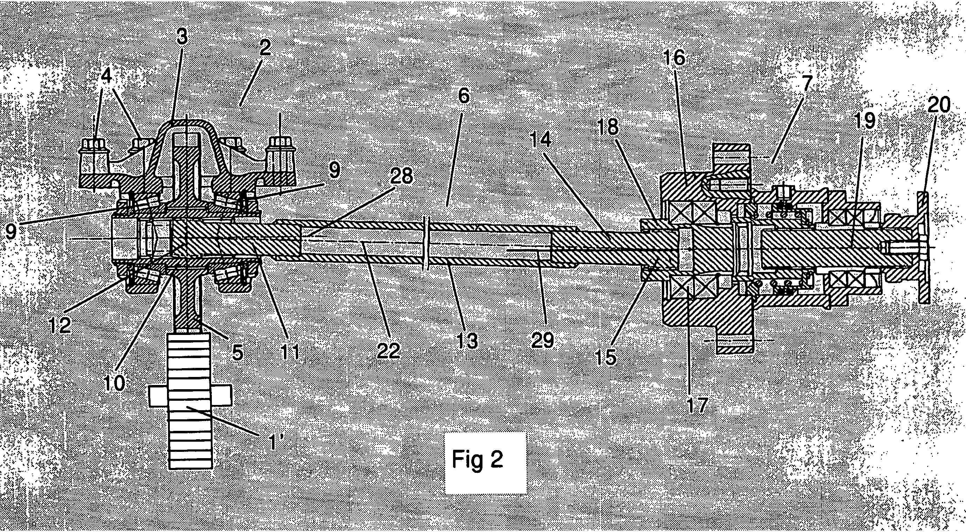

Fig. 1 depicts schematically a PTO which is fastened to a gearbox 1 forming part of a driveline of a motor vehicle, and which is therefore driven by the vehicle's engine. The PTO incorporates a first unit 2 which comprises a bearing bracket 3 which is fastened by bolts 4 to a sidewall of the gearbox 1. The bearing bracket 3 supports a gearwheel 5 which is in engagement with the forward gearwheel 1' on the countershaft of the gearbox 1. The forward gearwheel 1' of the gearbox 1 is depicted schematically in Fig. 2. The PTO further incorporates a shaft 6 about 60 cm long which extends from the first unit 2 to a second unit 7. The second unit 7 of the PTO is fastened to a rear wall of the gearbox 1 and incorporates connecting means for connecting a hydraulic motor 8 to the PTO in order to drive auxiliary equipment of the vehicle.

Fig. 2 depicts the design of the PTO in more detail. The bearing bracket 3 is thus fastenable to the gearbox 1 by means of bolts 4. The bearing bracket 3 supports the gearwheel 5 for rotation via two bearings 9. The gearwheel 5 incorporates a centrally situated hub 10 connected firmly to the gearwheel 5. The hub 10 incorporates a central recess with a radial internal surface whose shape is such as to form part of a first spline connection of the PTO. The shaft 6 incorporates a first homogeneous section 11 which incorporates a first end portion 12. The first end portion 12 exhibits an external radial surface whose shape is such as to form a complementing part of the first spline connection. The first spline connection thus transmits the rotary motion of the gearwheel 5 and the hub 10 to the shaft 6.

The shaft 6 incorporates a tubular middle section 13 which is thus firmly connected on one side to the first homogeneous section 11. The tubular middle section 13 is firmly connected on the opposite side to the other homogeneous section 14. The homogeneous section 14 incorporates a second end portion 15 which exhibits a radial external surface whose shape is such as to form part of a second spline connection. The PTO's second unit 7 incorporates a fastening element 16 designed to be fastened by bolts to a rear wall of the gearbox 1. The fastening element 16 incorporates bearings 17 by means of which a hub 18 is arranged for rotation relative to the fastening element 16. The hub 18 incorporates a central recess with a radial internal surface whose shape is such as to form a complementary part of the second spline connection. The second spline connection thus transmits the rotary motion of the shaft 6 to the hub 18. The hub 18 is connected for rotation with an output shaft 19 and a coupling plate 20 for connecting the hydraulic pump 8.

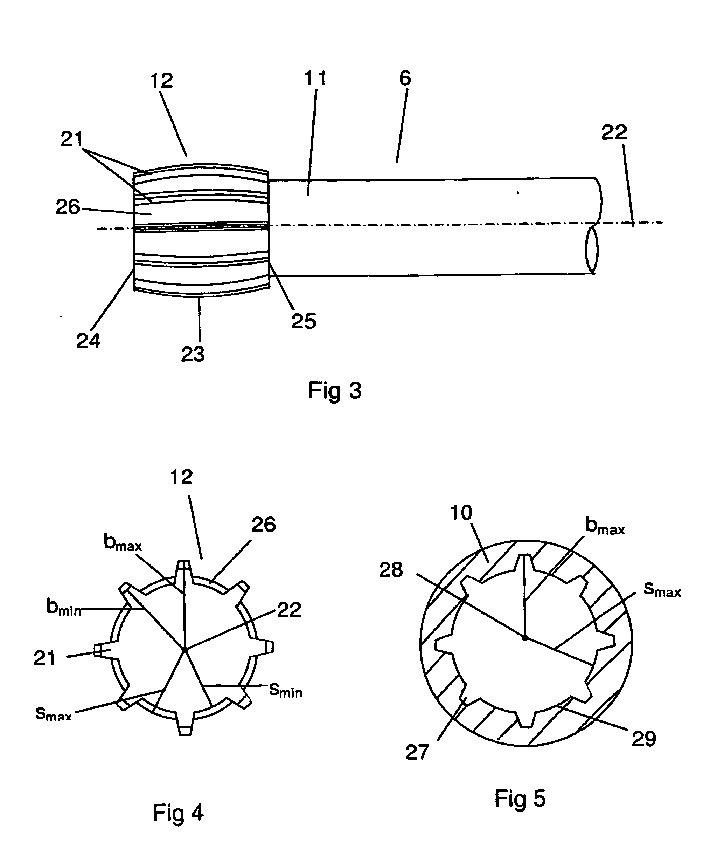

Fig. 3 depicts a section of the shaft 6 which incorporates the first end portion 12. The first end portion 12 incorporates an external peripheral surface with a multiplicity of ridges 21 which have a substantially axial extent. The ridges 21 are arranged round the surface of the first end portion 12 at substantially constant intervals. The ridges 21 incorporate a peripheral surface which exhibits along its axial extent a varying radial distance from a centreline 22 through the shaft 6. The peripheral surface of the ridges 21 exhibits at an axially middle position 23 situated substantially halfway between the axial end positions 24,25 of the ridges 21 a maximum radial distance from the centreline 22. The radial distance of the ridges 21 from the centreline 22 decreases continuously along substantially circular paths from the axial intermediate position 23 to the axial end positions 24,25.

Fig. 4 depicts the first end portion 12 of the shaft as seen from the left side in Fig. 3. The first end portion 12 incorporates an intermediate surface 26 which extends between the ridges 21. The intermediate surface 26 also exhibits along its axial extent a varying radial distance from the centreline 22 through the shaft 6. The radial distance of the intermediate surface 26 from the centreline varies in a manner corresponding to the distance of the peripheral surface of the ridges 21. The height of the ridges 21, i.e. the distance between the peripheral surface of the ridges 21 and the intermediate surface 26 situated radially within, is thus substantially constant along the axial extent of the ridges 21. The peripheral surface of the ridges 21 exhibits a maximum radial distance bₘₐₓ from the centreline 22 at the axial intermediate position 23. The peripheral surface of the ridges 21 exhibits a minimum radial distance bₘᵢₙ from the centreline 22 at the axial end positions 24,25. In a corresponding manner, the intermediate surface 26 of the ridges exhibits a maximum radial distance sₘₐₓ from the centreline 22 at the axial intermediate position 23 and a minimum radial distance sₘᵢₙ from the centreline 22 at the axial end positions 24,25. The longitudinal side surfaces of the ridges 21 are inclined so that the width of the ridges 21 decreases continuously in a radial direction.

Fig. 5 depicts a sectional view of the centrally situated hub 10 of the gearwheel 5. The hub 10 incorporates a recess which is defined by an internal radial surface substantially corresponding to the external radial surface at the axial intermediate position 23 of the first end portion 12. The internal radial surface of the hub 10 incorporates grooves 27 whose shape corresponds to the shape of the ridges 21. The number and position of the grooves 27 also correspond to those of the ridges 21. The peripheral surface of the grooves 27 is situated at a constant distance from a centreline 28 through the hub 10, which distance substantially corresponds to bₘₐₓ, i.e. the distance of the peripheral surface of the ridges 21 from the centreline 22 at the axial middle position 23.

Figs. 3-5 thus depict a design of the components of the first spline connection of the PTO. The components of the second spline connection have with advantage a shape corresponding to that of the components of the first spline connection. There is therefore no need for further description of the second spline connection.

In cases where a PTO fitted in a vehicle is required to impart an output speed which is normal in the context, the bearing bracket 3 is provided with a gearwheel 5 with the number of teeth and the size which produce the desired normal output speed. As the normal speed is that most frequently occurring, the bearing bracket 3 and the fastening element 16 are with advantage dimensioned according to that speed, so that the centreline 28 of the first hub 10 and the centreline 29 of the second hub 18 are in line with one another. In this situation, the shaft 6 should therefore not be angled relative to the hubs 10,18. Power transmission here takes place in the first and second spline connections mainly via the ridges 21 at the axial intermediate position 23, since only there are the ridges 21 wholly in engagement with the grooves 27 in the hubs 10,18.

In the case of a PTO fitted in a vehicle which is intended to provide a higher output speed than normal, the bearing bracket is provided with a gearwheel with a smaller number of teeth and a smaller size so that the PTO can provide the desired output speed. For the teeth to be in engagement, such a gearwheel has to be arranged at a smaller distance from the gearwheel in the gearbox than the ordinary gearwheel 5. The centreline 28 of the first hub 10 will therefore be shifted laterally relative to the centreline 29 of the second hub 18. The shaft 6 has therefore to be angled in the recesses 10, 18. When the first portion 12 and the second portion 15 of the shaft are angled in the recesses of the hubs 10,18, the main power transmission is shifted partly from the axially most central portion 23 of the first portion 12 and the second portion 15 to the points where the ridges 21 are wholly in engagement with the grooves 27.

In Fig. 2, the centreline 22 of the shaft 6 forms an angle of about 3° with the centreline 28 of the hub 10. The centreline of the shaft 6 forms a corresponding angle with the centreline 29 of the hub 18. The first end portion 12 and second end portion 15 of the shaft 6 here allow substantially continuous angular positioning relative to the recesses of the first hub 10 and the second hub 18 within an angular range of, for example, ±5°. Using such a shaft which incorporates ridges 21 with the shape described above in a spline connection means that other components of the PTO can take the form substantially of standardised basic components and be used substantially independently of the size of the gearwheel 5 and hence the speed extracted from the PTO. This means that the cost of providing PTOs with an output speed which differs from the speed normally used can be reduced considerably.

The invention is in no way limited to the embodiment described but may be varied freely within the scopes of the claims. There is also the possibility of the grooves of the hubs 10,18 being formed in an axial direction so that they follow instead a substantially circular path between their end positions. Such grooves allow a corresponding angling of a shaft with conventional straight ridges. The cross-sectional shape of the ridges and the cross-sectional shape of the accommodating grooves may be varied substantially to any extent allowed by the desired oblique positioning of the shaft 6 in the spline connection, subject to continuing to be able to transmit a driving motion.

Nor is the invention limited to PTOs which drive a hydraulic pump, since PTOs can be used analogously to drive auxiliary equipment of vehicles by purely mechanical means.

## Claims

1. A power take-off, i.e. a PTO, on an engine-driven vehicle whereby the PTO comprises a first unit (2) which incorporates not only a motion-transmitting element (5) connected to a transmission element of a driveline of the vehicle but also a hub (10) with a recess which forms part of a first spline connection, a second unit (7) which , incorporates not only connecting means to make it possible to connect an equipment item (8) intended to be driven by the PTO but also a hub (18) with a recess which forms part of a second spline connection, and a shaft (6) which extends between the first unit (2) and the second unit (7) and which comprises a first portion (12) which forms a complementing part of the first spline connection and a second portion (15) which forms a complementing part of the second spline connection, wherein said first and second spline connections are so designed that the first portion (12) and second portion (15) of the shaft can be positioned at at least two different angles to the recesses of the accommodating hubs (10,18), **characterised in that** the motion-transmitting element of the first unit (2) is a gearwheel (5), that the first unit (2) incorporates a bearing bracket (3) which supports the gearwheel (5), that the bearing bracket (3) is fastened to a gearbox (1) of the vehicle and that the gearwheel (5) is in engagement with a gearwheel (1') in the gearbox (1).

2. A PTO according to claim 1, **characterised in that** the first portion (12) and second portion (15) of the shaft can be positioned at substantially continuously variable angles to the recesses of the accommodating hubs (10,18) within an angular range.

3. A PTO according to claim 1 or 2, **characterised in that** the first portion (12) and second portion (15) of the shaft exhibit a peripheral surface which incorporates a multiplicity of ridges (21) with a mainly axial extent, which ridges (21) exhibit a peripheral surface which in an axial direction is situated at a variable radial distance from a centreline (22) through the shaft (6).

4. A PTO according to claim 3, **characterised in that** the peripheral surface of the ridges (21) exhibits a maximum distance from the centreline (22) at an axially intermediate position (23) situated between the axial end positions (24,25) of the ridges (21).

5. A PTO according to claim 4, **characterised in that** the distance of the peripheral surface of the ridges (21) from the shaft (6) decreases continuously from the axial intermediate position (23) towards the axial end position (24,25).

6. A PTO according to claim 5, **characterised in that** the peripheral surface of the ridges (21) follows part of a circular path between the axial end positions (24,25).

7. A PTO according to any one of the foregoing claims, **characterised in that** said equipment item driven by the PTO is a hydraulic pump (8).

## Patentansprüche

1. Abtriebseinrichtung an einem motorgetriebenen Fahrzeug, wobei die Abtriebseinrichtung umfasst eine erste Einheit (2), die nicht nur ein bewegungsübertragendes Element (5) aufweist, das an ein Übertragungselement eines Antriebsstrangs des Fahrzeugs angeschlossen ist, sondern auch eine Nabe (10) mit einer Ausnehmung, die einen Teil einer ersten Keilverbindung bildet, eine zweite Einheit (7), die nicht nur ein Verbindungsmittel umfasst, das es ermöglicht, eine Ausrüstungsanordnung (8) anzuschließen, die dazu vorgesehen ist, von der Abtriebseinrichtung angetrieben zu werden, sondern auch eine Nabe (18) mit einer Ausnehmung, die einen Teil einer zweiten Keilverbindung bildet, und eine Welle (6), die sich zwischen der ersten Einheit (2) und der zweiten Einheit (7) erstreckt und die einen ersten Abschnitt (12), der einen ergänzenden Teil der ersten Keilverbindung bildet, und einen zweiten Abschnitt (15) umfasst, der einen ergänzenden Teil der zweiten Keilverbindung bildet, wobei die erste und die zweite Keilverbindung derart gestaltet sind, dass der erste Abschnitt (12) und der zweite Abschnitt (15) der Welle in wenigstens zwei verschiedenen Winkeln zu den Ausnehmungen der aufnehmenden Naben (10, 18) positioniert werden können,
**dadurch gekennzeichnet, dass** das bewegungsübertragende Element der ersten Einheit (2) ein Zahnrad (5) ist, dass die erste Einheit (2) einen Lagerträger (3) umfasst, der das Zahnrad (5) lagert, dass der Lagerträger (3) an einem Getriebe (1) des Fahrzeugs befestigt ist und dass das Zahnrad (5) sich im Eingriff mit einem Zahnrad (1') in dem Getriebe (1) befindet.

2. Abtriebseinrichtung nach Anspruch 1,
**dadurch gekennzeichnet, dass** der erste Abschnitt (12) und der zweite Abschnitt (15) der Welle in im Wesentlichen kontinuierlich veränderlichen Winkeln zu den Ausnehmungen der aufnehmenden Naben (10, 18) innerhalb eines Winkelbereichs positioniert werden können.

3. Abtriebseinrichtung nach Anspruch 1 oder 2,
**dadurch gekennzeichnet, dass** der erste Abschnitt (12) und der zweite Abschnitt (15) der Welle eine Peripherfläche darbieten, die eine Mehrzahl von Rippen (21) mit im Wesentlichen axialer Erstreckung umfasst, wobei die Rippen (21) eine Peripherfläche darbieten, die in axialer Richtung mit variablem radialen Abstand von einer Mittellinie (22) durch die Welle (6) angeordnet sind.

4. Abtriebseinrichtung nach Anspruch 3,
**dadurch gekennzeichnet, dass** die Peripherfläche der Rippen (21) einen maximalen Abstand von der Mittellinie (22) an einer axialen Zwischenposition (23) darbieten, die zwischen den axialen Endpositionen (24, 25) der Rippen (21) angeordnet sind.

5. Abtriebseinrichtung nach Anspruch 4,
**dadurch gekennzeichnet, dass** der Abstand der Peripherfiläche der Rippen (21) von der Welle (6) kontinuierlich von der axialen Zwischenposition (23) zu der axialen Endposition (24, 25) hin abnimmt.

6. Abtriebseinrichtung nach Anspruch 5,
**dadurch gekennzeichnet, dass** die Peripherfläche der Rippen (21) einem Teil eines kreisförmigen Weges zwischen den axialen Endpositionen (24, 25) folgt.

7. Abtriebseinrichtung nach einem der vorangehenden Ansprüche,
**dadurch gekennzeichnet, dass** die von der Abtriebseinrichtung angetriebene Ausrüstungsanordnung eine Hydraulikpumpe (8) ist.

## Revendications

1. Dispositif de prise de force, c'est-à-dire PTO, sur un véhicule à moteur, le PTO comprenant une première unité (2) qui renferme non seulement un élément de transmission de mouvement (5) relié à un élément de transmission d'une transmission du véhicule, mais aussi un moyeu (10) présentant un évidemment qui forme une partie d'une première liaison cannelée, une deuxième unité (7) qui renferme non seulement des moyens de liaison pour permettre de relier un organe fonctionnel (8) destiné à être entraîné par le PTO, mais aussi un moyeu (18) présentant un évidemment qui forme une partie d'une deuxième liaison cannelée, et un arbre (6) qui s'étend entre la première unité (2) et la deuxième unité (7) et qui comprend une première partie (12) qui forme une partie complémentaire de la première liaison cannelée, et une deuxième partie (15) qui forme une partie complémentaire de la deuxième liaison cannelée, dans lequel lesdites première et deuxième liaisons cannelées sont conçues de telle manière que la première partie (12) et la deuxième partie (15) de l'arbre puissent être positionnées selon au moins deux angles différents par rapport aux évidements des moyeux de réception (10, 18), **caractérisé en ce que** l'élément de transmission de mouvement de la première unité (2) est une roue dentée (5), **en ce que** la première unité (2) renferme un support d'appui (3) qui supporte la roue dentée (5), **en ce que** le support d'appui (3) est fixé à une boîte de vitesses (1) du véhicule, et **en ce que** la roue dentée (5) est en prise avec une roue dentée (1') dans la boîte de vitesses (1).

2. PTO selon la revendication 1, **caractérisé en ce que** la première partie (12) et la deuxième partie (15) de l'arbre peuvent être positionnées sous des angles variables de manière sensiblement continue par rapport aux évidements des moyeux de réception (10, 18) à l'intérieur d'une plage angulaire.

3. PTO selon la revendication 1 ou 2, **caractérisé en ce que** la première partie (12) et la deuxième partie (15) de l'arbre présentent une surface périphérique qui renferme plusieurs nervures (21) d'extension principalement axiale, lesquelles nervures (21) présentent une surface périphérique qui est située, dans une direction axiale, à une distance radiale variable de l'axe central (22) de l'arbre (6).

4. PTO selon la revendication 3, **caractérisé en ce que** la surface périphérique des nervures (21) présente une distance maximale par rapport à l'axe central (22) en une position axialement intermédiaire (23) située entre les positions axiales d'extrémité (24, 25) des nervures (21).

5. PTO selon la revendication 4, **caractérisé en ce que** la distance de la surface périphérique des nervures (21) par rapport à l'arbre (6) diminue de manière continue depuis la position axiale intermédiaire (23) vers la position axiale d'extrémité (24, 25).

6. PTO selon la revendication 5, **caractérisé en ce que** la surface périphérique des nervures (21) suit une partie d'un trajet circulaire entre les positions axiales d'extrémité (24, 25).

7. PTO selon l'une quelconque des revendications précédentes, **caractérisé en ce que** ledit organe fonctionnel entraîné par le PTO est une pompe hydraulique (8).
